# EUROPEAN PATENT SPECIFICATION

(11) **EP 4 029 764 B1**
(45) Date of publication and mention of the grant of the patent: **09.08.2023**
(21) Application number: 21214687.2
(22) Date of filing: 15.12.2021
(51) Int. Cl.: B62D 15/02, B60W 30/06

(54) **AUTOMATIC PARKING METHOD, PARKING SYSTEM, COMPUTER DEVICE, AND STORAGE MEDIUM**
AUTOMATISCHES PARKVERFAHREN, PARKSYSTEM, COMPUTERVORRICHTUNG UND SPEICHERMEDIUM
SYSTÈME DE STATIONNEMENT AUTOMATIQUE, PROCÉDÉ DE STATIONNEMENT, DISPOSITIF INFORMATIQUE ET SUPPORT DE STOCKAGE

(30) Priority: 19.01.2021 CN 202110069629
(43) Date of publication of application: 20.07.2022
(73) Proprietor: Guangzhou Xiaopeng Autopilot Technology Co., Ltd., Guangzhou, Guangdong 510000 (CN)
(72) Inventor: GUANG, Xueling, Guangzhou, 510000 (CN); GONG, Wei, Guangzhou, 510000 (CN); GUAN, Xun, Guangzhou, 510000 (CN)
(74) Representative: Ran, Handong

(56) References cited:
- EP-A1- 3 653 470
- WO-A1-2020/095672
- CN-A- 110 329 245
- US-A1- 2010 156 672
- US-A1- 2017 043 808

## Description

### FIELD

The present disclosure relates to the field of automatic parking technologies for vehicles, and more particularly, to an automatic parking method, a parking system, a computer device, and a storage medium.

### BACKGROUND

With the progress of society, the development of economy and the improvement of people's living standards, the number of registered vehicles in service in China, especially in cities, has increased year by year. The number of motor vehicles on roads is increasing rapidly at a speed visible to naked eyes. This allows more and more ordinary families to own vehicles and heralds the arrival of the era of vehicle popularization in China.

In order to encourage people to travel by vehicle and solve a problem of road congestion caused by people's disordered parking, more and more parking lots have emerged in cities. These parking lots are mainly distributed in populous places, such as large shopping malls, shopping centers, convention and exhibition centers, airports, residential communities, etc., and have gradually become a new essential facility for buildings in cities.

At present, in order to assist drivers in better parking their vehicles into parking spaces, vehicle manufacturers apply ultrasonic radar-based automatic parking technology to almost every vehicle, such that a vehicle can detect a change in distance between the vehicle and an obstacle (another vehicle, a ground lock, or a building) in a parking space through the ultrasonic radar, thereby identifying a parking space and determining whether the parking space is available, and then realizing automatic parking. However, automatic parking in such a manner has certain limitations. For example, when a vehicle is controlled to reach a target parking space (a frequently used parking space), if the target parking space cannot be identified or detected due to interference and other reasons, the automatic parking may fail, which may seriously affect use experience of a driver. EP3653470A1 discloses the preamble of the independent claims and shows a parking control system for an autonomous vehicle to quickly and safely move the autonomous vehicle to an empty parking space in a parking lot by monitoring a location and movement of each autonomous vehicle which enters the parking lot based on a three-dimensional (3D) electronic map and providing a driving route (driving trajectory) as well as a guiding route to a parking space selected by the driver to each autonomous vehicle. US2017043808A1 discloses a parking assist apparatus and method, which is capable of rapidly and easily recognizing a parking space by generating a virtual parking slot map using a laser scanner and ultrasonic sensors and using the virtual parking slot map. WO2020095672A1 discloses a vehicle control device, which is capable of flexibly changing a parking position and a traveling route when guiding a vehicle to a parking position. CN110329245A discloses an automatic parking method, device, equipment and a vehicle, in which a convenient parking service can be provided for a user, and the automatic parking efficiency of the vehicle and the user experience are improved. US2010156672A1 discloses a system and a method for auto valet parking.

Therefore, it seems rather necessary to develop a technology that can increase a parking success rate to overcome the above defects.

The above information provided as background information merely aims to assist the understanding of the present disclosure, rather than determining or acknowledging whether any of the above contents can be regarded as the prior art relative to the present disclosure.

### SUMMARY

Examples of the present disclosure disclose an automatic parking method, a parking system, a computer device, and a storage medium, capable of safely parking a vehicle into a parking space in a parking lot, thereby improving use experience of a user.

In a first aspect of the examples of the present disclosure, an automatic parking method is disclosed.

As an optional implementation, in the first aspect of the examples of the present disclosure, the method includes: establishing, in response to a vehicle reaching a target parking region in a parking lot, a virtual parking space based on position information of a target parking space predetermined in a map of the parking lot, the target parking region containing the target parking space, and planning an automatic parking path based on the virtual parking space along with position information of the vehicle in the map of the parking lot; and parking the vehicle into the target parking space based on the automatic parking path. The automatic parking method further includes, prior to said establishing, in response to the vehicle reaching the target parking region in the parking lot, the virtual parking space based on the position information of the target parking space predetermined in the map of the parking lot, and planning the automatic parking path based on the virtual parking space along with the position information of the vehicle in the map of the parking lot: obtaining, in response to the vehicle entering the parking lot, the map of the parking lot; and determining, during a process of driving in the parking lot, whether the vehicle has reached the target parking region. In the automatic parking method, said determining, during the process of driving in the parking lot, whether the vehicle has reached the target parking region includes: collecting, during the process of driving in the parking lot, environmental feature information around the vehicle; matching the collected environmental feature information with environmental feature information in the map of the parking lot to determine the position information of the vehicle in the map of the parking lot; detecting whether a distance between the position information of the vehicle and the target parking region in the map of the parking lot is smaller than a second distance threshold; and when the distance between the position information of the vehicle and the target parking region in the map of the parking lot is smaller than the second distance threshold, determining that the vehicle has reached the target parking region.

As an optional implementation, in the automatic parking method, said obtaining, in response to the vehicle entering the parking lot, the map of the parking lot includes: detecting whether a Global Positioning System (GPS) signal of the vehicle is weakened or lost; obtaining, when the GPS signal of the vehicle is weakened or lost, a GPS position of the vehicle; detecting whether a distance between the GPS position of the vehicle and the parking lot is smaller than a first distance threshold; and when the distance between the GPS position of the vehicle and the parking lot is smaller than the first distance threshold, determining that the vehicle has entered the parking lot, and obtaining the map of the parking lot.

As an optional implementation, in the automatic parking method, said establishing, in response to the vehicle reaching the target parking region in the parking lot, the virtual parking space based on the position information of the target parking space predetermined in the map of the parking lot, and planning the automatic parking path based on the virtual parking space along with the position information of the vehicle in the map of the parking lot includes: detecting, in response to the vehicle reaching the target parking region in the parking lot, whether the vehicle identifies the target parking space in the target parking region; when the vehicle identifies the target parking space in the target parking region, determining a coordinate position of the target parking space in a vehicle body coordinate system, and planning the automatic parking path; and when the vehicle identifies no target parking space in the target parking region, establishing the virtual parking space based on the position information of the target parking space predetermined in the map of the parking lot, and planning the automatic parking path based on the virtual parking space along with the position information of the vehicle in the map of the parking lot.

In a second aspect of the examples of the present disclosure, an automatic parking system is disclosed.

As an optional implementation, in the second aspect of the examples of the present disclosure, the system includes a path planning module and a parking-space-entering module. The path planning module is configured to: establish, in response to a vehicle reaching a target parking region in a parking lot, a virtual parking space based on position information of a target parking space predetermined in a map of the parking lot, the target parking region containing the target parking space; and plan an automatic parking path based on the virtual parking space along with position information of the vehicle in the map of the parking lot. The parking-space-entering module is configured to park the vehicle into the target parking space based on the automatic parking path. The automatic parking system further includes a map obtaining module and a driving determining module. The map obtaining module is configured to obtain, in response to the vehicle entering the parking lot, the map of the parking lot, prior to said establishing, in response to the vehicle reaching the target parking region in the parking lot, the virtual parking space based on the position information of the target parking space predetermined in the map of the parking lot, and planning the automatic parking path based on the virtual parking space along with the position information of the vehicle in the map of the parking lot. The driving determining module is configured to determine, during a process of driving in the parking lot, whether the vehicle has reached the target parking region. In the automatic parking system, the driving determining module is configured to: collect, during the process of driving in the parking lot, environmental feature information around the vehicle; match the collected environmental feature information with environmental feature information in the map of the parking lot to determine the position information of the vehicle in the map of the parking lot; detect whether a distance between the position information of the vehicle and the target parking region in the map of the parking lot is smaller than a second distance threshold; and when the distance between the position information of the vehicle and the target parking region in the map of the parking lot is smaller than the second distance threshold, determine that the vehicle has reached the target parking region.

As an optional implementation, in the automatic parking system, the map obtaining module is specifically configured to: detect whether a GPS signal of the vehicle is weakened or lost; obtain, when the GPS signal of the vehicle is weakened or lost, a GPS position of the vehicle; detect whether a distance between the GPS position of the vehicle and the parking lot is smaller than a first distance threshold; and when the distance between the GPS position of the vehicle and the parking lot is smaller than the first distance threshold, determine that the vehicle has entered the parking lot, and obtain the map of the parking lot.

As an optional implementation, in the automatic parking system, the path planning module is specifically configured to: detect, in response to the vehicle reaching the target parking region, whether the vehicle identifies the target parking space in the target parking region; when the vehicle identifies the target parking space in the target parking region, determine a coordinate position of the target parking space in a vehicle body coordinate system, and plan the automatic parking path; and when the vehicle identifies no target parking space in the target parking region, establish the virtual parking space based on the position information of the target parking space predetermined in the map of the parking lot, and plan the automatic parking path based on the virtual parking space along with the position information of the vehicle in the map of the parking lot.

In a third aspect of the examples of the present disclosure, a computer device is disclosed. As an optional implementation, the computer device includes a memory having a computer program stored thereon, and a processor. The processor is configured to, when executing the computer program, implement the automatic parking method according to any of the above aspects.

In a fourth aspect of the examples of the present disclosure, a storage medium is disclosed. The storage medium stores computer-executable instructions.

As an optional implementation, in the fourth aspect of the examples of the present disclosure, the computer-executable instructions are executed by a computer processor to implement the automatic parking method according to any of the above aspects.

Compared with the related art, the examples of the present disclosure can provide the following advantageous effects.

By using the map corresponding to the parking lot to assist the vehicle in planning the automatic parking path after the vehicle enters the parking lot, efficient, flexible and safe automatic parking can be performed, which overcomes a defect in the related art that the vehicle cannot be parked in case the target parking space cannot be identified by the vehicle, improves use experience of a driver, and is suitable for large-scale promotion and application.

### BRIEF DESCRIPTION OF DRAWINGS

In order to clearly explain technical solutions of the examples of the present disclosure or in the related art, drawings used in the description of the examples or the related art are briefly described below. Obviously, the drawings as described below are merely some examples of the present disclosure. Based on these drawings, other drawings can be obtained by those skilled in the art without creative effort.
FIG. 1 is a schematic flowchart illustrating an automatic parking method according to Example 1 of the present disclosure.
FIG. 2 is a schematic flowchart illustrating an automatic parking method according to Example 2 of the present disclosure.
FIG. 3 is a schematic flowchart illustrating an automatic parking method according to Example 3 of the present disclosure.
FIG. 4 is a schematic flowchart illustrating an automatic parking method according to Example 4 of the present disclosure.
FIG. 5 is a schematic block diagram illustrating a structure of an automatic parking system according to Example 5 of the present disclosure.
FIG. 6 is a schematic block diagram illustrating a structure of a computer device according to Example 6 of the present disclosure.

### DESCRIPTION OF EMBODIMENTS

Technical solutions according to the examples of the present disclosure will be described clearly and completely below in combination with the accompanying drawings of the examples of the present disclosure. Obviously, the examples described below are only a part of the examples of the present disclosure, rather than all examples of the present disclosure. On a basis of the examples of the present disclosure, all other examples obtained by those skilled in the art without creative labor shall fall within the protection scope of the present disclosure as defined by the appended claims.

It should be noted that terms, such as "first" and "second", in the specification and claims of the present disclosure are used to distinguish different objects, rather than to describe a specific sequence. Terms "include/comprise", "have/has", and any variations thereof in the examples of the present disclosure are intended to cover non-exclusive inclusions. For example, a process, a method, a system, a product, or a device that includes a series of steps or units is not necessarily limited to those explicitly listed steps or units, but may include other steps or units that are not explicitly listed or are inherent to the process, method, product, or device.

The examples of the present disclosure disclose an automatic parking method, a parking system, a computer, and a storage medium, capable of automatically parking a vehicle into a target parking space in a parking lot, thereby effectively relieving parking pressure of the driver, promoting parking efficiency, and improving use experience of a user.

### Example 1

In view of the defects in the related art, the inventors actively conduct research and make innovations by combining years of rich practical experience and professional knowledge in the automotive industry with academic theories, aiming at developing a feasible and practical automatic parking technology applicable in parking lots. After continuous research, design, and repeated trials and improvements, the present disclosure, which indeed has practical value, is provided.

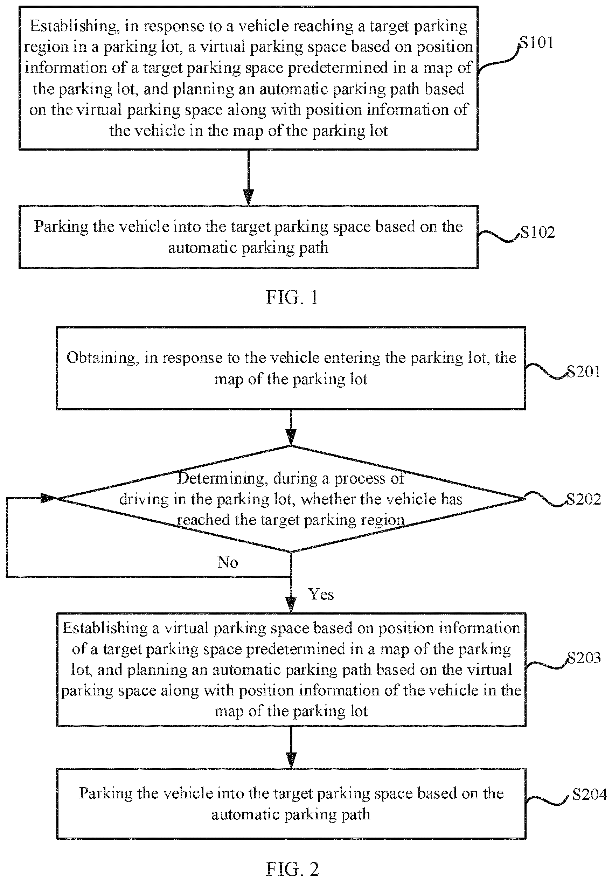

Referring to FIG. 1, FIG. 1 is a schematic flowchart illustrating an automatic parking method according to Example 1 of the present disclosure. The method is suitable for a scenario where a driver parks a vehicle into a target parking space in a parking lot. The method is performed by an automatic parking system. The system can be implemented by software and/or hardware and integrated into the vehicle. As illustrated in FIG. 1, the automatic parking method may include the following steps.

In step 101, a virtual parking space is established, in response to a vehicle reaching a target parking region in a parking lot, based on position information of a target parking space predetermined in a map of the parking lot, and an automatic parking path is planned based on the virtual parking space along with position information of the vehicle in the map of the parking lot.

It should be noted that since the map of the parking lot is made through crowdsourcing, its precision and static features may improve with an increase in the number of times of map fusion. Eventually, a precise map of the parking lot can be formed, which can be downloaded and used freely by users of vehicles entering the parking lot. The map of the parking lot mainly includes some relatively fixed static features, such as a lane line in the parking lot, an indicator arrow in a lane, a number of a parking space, a type of a parking space (such as a parking space for the disabled), a speed bump in the parking lot, a stop sign, a yield sign, a fire hydrant, entrance and exit barrier gates, and the like.

The target parking space refers to a frequently-used and fixed parking space, i.e., a private parking space. The driver can mark the target parking space in the downloaded map of the parking lot at any time and save the target parking space to the cloud, or turn to a management party, e.g., a property management office, for entering the target parking space in the map of the parking lot. The examples of the present disclosure are not limiting in this regard. The target parking region refers to a certain range of region that contains the target parking space. A specific size of the region and identifying means of the vehicle can be set arbitrarily. A purpose of setting the target parking region is to let the vehicle know when it can start to plan the automatic parking path, so as to avoid waste of resources due to early planning.

The virtual parking space can be presented to the user on the vehicle in the form of panoramic imagery. Since the position information of the target parking space is already obtained, features of the established virtual parking space are in a one-to-one correspondence with features of the target parking space on the ground in a real environment, which include, e.g., a length, a width, and a thickness of a parking space line. That is, the established virtual parking space is coincident with the target parking space on the ground in the real environment. In this case, even if the vehicle cannot identify the target parking space on the ground in the real environment, automatic parking can still be carried out.

In this example, after determining the position information of the vehicle in the map of the parking lot and the position information of the virtual parking space, an optimal automatic parking path may be planned. There are various technical means in the related art to plan the optimal automatic parking path. However, since those technical means are not the design focus of the present disclosure, details thereof will not be elaborated here.

In step 102, the vehicle is parked into the target parking space based on the automatic parking path.

It should be noted that during the process of parking the vehicle into the target parking space based on the automatic parking path, it is necessary to detect whether there is a collision risk on the automatic parking path in cooperation with an apparatus or a device with obstacle detection capabilities such as an ultrasonic radar on the vehicle, because other movable obstacles (people or vehicles) in the parking lot are unpredictable and do not exist in the map of the parking lot. When there is a collision risk on the automatic parking path, it means that a great risk exists for continuing parking in this case. Consequently, parking needs to be stopped and cannot be continued until a movable obstacle leaves.

With the automatic parking method according to the example of the present disclosure, by using the map corresponding to the parking lot to assist the vehicle in planning the automatic parking path after the vehicle enters the parking lot, efficient, flexible and safe automatic parking can be performed, which overcomes a defect in the related art that the vehicle cannot be parked in case the target parking space cannot be identified by the vehicle, improves use experience of the driver, and is suitable for large-scale promotion and application.

### Example 2

Referring to FIG. 2, FIG. 2 is a schematic flowchart illustrating an automatic parking method according to Example 2 of the present disclosure. On a basis of the technical solution provided in Example 1, Example 2 optimizes the method, prior to the step S101 of "establishing, in response to the vehicle reaching the target parking region in the parking lot, the virtual parking space based on the position information of the target parking space predetermined in the map of the parking lot, and planning the automatic parking path based on the virtual parking space along with the position information of the vehicle in the map of the parking lot". The explanation of terms that are the same as or correspond to those in the above examples will not be repeated here. Specifically, the method according to this example may further include: obtaining, in response to the vehicle entering the parking lot, the map of the parking lot; and determining, during a process of driving in the parking lot, whether the vehicle has reached the target parking region.

Based on the above optimization, as illustrated in FIG. 2, the automatic parking method according to this example may specifically include the following steps.

In step 201, the map of the parking lot is obtained in response to the vehicle entering the parking lot.

In this example, when the driver drives the vehicle into the parking lot, the vehicle may automatically request and download the map corresponding to the parking lot from a cloud, without a manual download operation from the driver, such that the entire parking process is intelligent and convenient.

Preferably, the step S201 may further include: detecting whether a GPS signal of the vehicle is weakened or lost; obtaining, when the GPS signal of the vehicle is weakened or lost, a GPS position of the vehicle; detecting whether a distance between the GPS position of the vehicle and the parking lot is smaller than a first distance threshold; and when the distance between the GPS position of the vehicle and the parking lot is smaller than the first distance threshold, determining that the vehicle has entered the parking lot, and obtaining the map of the parking lot.

It should be noted that each vehicle is currently equipped with a GPS positioning apparatus. To ensure normal operations of a GPS device, the GPS device needs to establish a connection with satellites. After the connection is established, the vehicle obtains its own GPS positioning information from the GPS positioning apparatus in real time based on change in position. At present, since most parking lots are built underground, poor GPS signals can be received or GPS signals can barely be received when a vehicle is driving in an underground parking lot. Therefore, a weakening or loss of GPS signals can be used as a condition for determining that the vehicle may have entered the parking lot. In order to further determine whether the vehicle has actually entered the parking lot, this example compares the GPS position of the vehicle at a time immediately before the weakening or loss of the GPS signal with a position of a parking lot near the vehicle. When a distance between the GPS position of the vehicle and the position of the parking lot is smaller than the first distance threshold, it means that the distance between the vehicle and the parking lot is short, and it can be determined that the vehicle has entered the parking lot. The first distance threshold is set by a technician through experience which is obtained based on specific experimental results, and can be any suitable value.

Of course, there are many other ways to determine whether the vehicle has entered the parking lot. For example, a number of GPS satellites connected to the GPS positioning apparatus can be used to determine whether the vehicle has entered the parking lot, based on the following principle. When the vehicle is underground or indoors, the number of GPS satellites to which the vehicle can be connected is small since satellite signals can be blocked by physical buildings such as walls. On the contrary, when the vehicle is outdoors, the GPS satellites can establish connections with the vehicle freely, such that the number of the GPS satellites that are detected to be connected to the vehicle is large. Therefore, the number of the GPS satellites connected to the GPS positioning apparatus can be used to determine whether the vehicle has entered the parking lot.

In step 202, during a process of driving in the parking lot, it is determined whether the vehicle has reached the target parking region. When the vehicle has reached the target parking region, step S203 is executed; and when the vehicle has not reached the target parking region, the step S202 is continued to be executed.

It should be noted that, as a condition for the vehicle to start to plan the automatic parking path, the specific size of the target parking region and the identifying means of the vehicle can be set arbitrarily as described above.

In step 203, a virtual parking space is established based on position information of a target parking space predetermined in a map of the parking lot, and an automatic parking path is planned based on the virtual parking space along with position information of the vehicle in the map of the parking lot.

In step 204, the vehicle is parked into the target parking space based on the automatic parking path.

In addition to the advantageous effects of Example 1, the example of the present disclosure also refines conditions for determining whether the vehicle has entered the parking lot, so that the vehicle can accurately identify its surrounding environment and make an automatic parking response in time, thereby making the vehicle intelligent and user-friendly, and having a high promotion and application value.

### Example 3

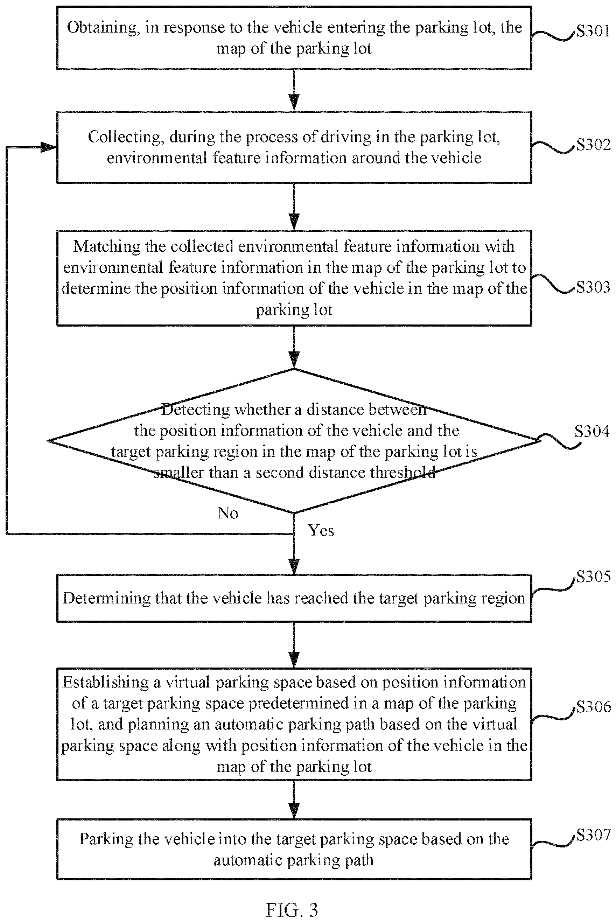

Referring to FIG. 3, FIG. 3 is a schematic flowchart illustrating an automatic parking method according to Example 3 of the present disclosure. This example further optimizes the step S202 of "determining, during the process of driving in the parking lot, whether the vehicle has reached the target parking region" on a basis of the technical solution provided in Example 2. The explanation of terms that are the same as or correspond to those in the above examples will not be repeated here.

That is, the optimizing may include: collecting, during the process of driving in the parking lot, environmental feature information around the vehicle; matching the collected environmental feature information with environmental feature information in the map of the parking lot to determine the position information of the vehicle in the map of the parking lot; detecting whether a distance between the position information of the vehicle and the target parking region in the map of the parking lot is smaller than a second distance threshold; and when the distance between the position information of the vehicle and the target parking region in the map of the parking lot is smaller than the second distance threshold, determining that the vehicle has reached the target parking region.

As illustrated in FIG. 3, on a basis of the above optimization, the automatic parking method according to this example may specifically include the following steps.

In step S301, the map of the parking lot is obtained in response to the vehicle entering the parking lot.

In step S302, during the process of driving in the parking lot, environmental feature information around the vehicle is collected.

In step S303, the collected environmental feature information is matched with environmental feature information in the map of the parking lot to determine the position information of the vehicle in the map of the parking lot.

It should be noted that, as described above, generally, a GPS signal quality in an underground parking lot is poor or even no GPS signal can be received in the underground parking lot; hence a position of the vehicle cannot be determined by GPS positioning. Accordingly, other technical means are needed to determine a real-time position of the vehicle, so as to further determine whether the vehicle has reached the target parking region. Since the environmental feature information in the map of the parking lot is relatively fixed, in this example the surrounding environment of the vehicle can be collected by a camera or an ultrasonic radar on the vehicle to obtain real-time environmental feature information, and then the real-time environmental feature information can be compared with the environmental feature information in the map of the parking lot to determine the position information of the vehicle in the map of the parking lot.

Of course, other technical means can also be adopted. For example, a transponder that can report a current position of the vehicle can be arranged at a fixed distance interval on a lane in the parking lot, and a query host paired with the transponder can be arranged on the vehicle. Then, every time the vehicle passes a transponder, the query host on the vehicle will ask the transponder where the current position is in the parking lot to determine a position of the vehicle.

In step S304, it is detected whether a distance between the position information of the vehicle and the target parking region in the map of the parking lot is smaller than a second distance threshold. When the distance between the position information of the vehicle and the target parking region in the map of the parking lot is smaller than the second distance threshold, step S305 is executed; and when the distance between the position information of the vehicle and the target parking region in the map of the parking lot is not smaller than the second distance threshold, the process returns to execute the step S302.

It should be noted that the second distance threshold is set by a technician through experience which is obtained based on specific experimental results, and can be any suitable value. When the distance between the position information of the vehicle and the target parking region in the map of the parking lot is smaller than the second distance threshold, it means that the distance between the vehicle and the target parking region is short, and thus it can be determined that the vehicle has reached the target parking region.

In step S305, it is determined that the vehicle has reached the target parking region.

In step S306, a virtual parking space is established based on position information of a target parking space predetermined in a map of the parking lot, and an automatic parking path is planned based on the virtual parking space along with position information of the vehicle in the map of the parking lot.

In step S307, the vehicle is parked into the target parking space based on the automatic parking path.

In addition to the advantageous effects of Example 2, the example of the present disclosure also specifically provides that the position information of the vehicle can be determined by comparing the real-time environmental feature information with the environmental feature information in the map of the parking lot to determine whether the vehicle has reached the target parking region, thereby not only promoting the accuracy of vehicle position identification and but also increasing reliability. In this way, a success rate of automatic parking can be ensured and use experience of the user can be improved.

### Example 4

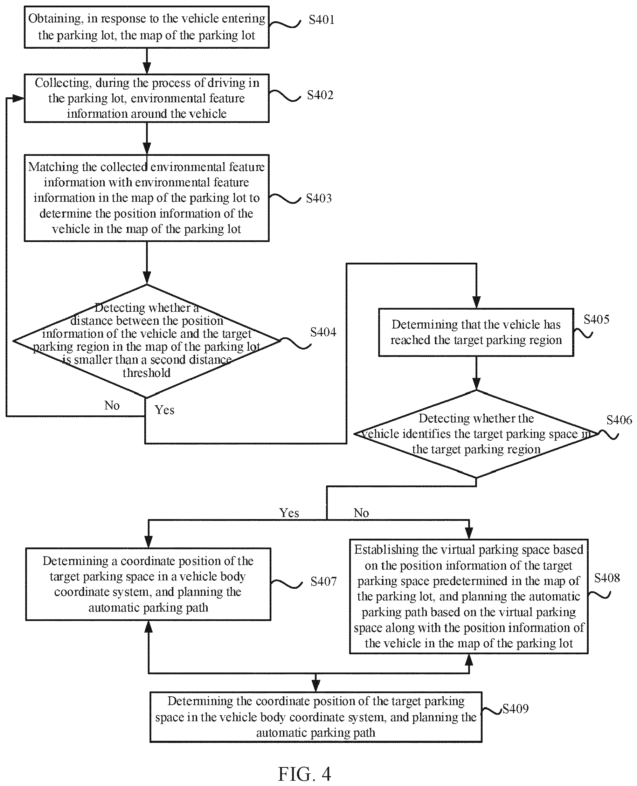

Referring to FIG. 4, FIG. 4 is a schematic flowchart illustrating an automatic parking method according to Example 4 of the present disclosure. This example further optimizes the step S306 of "establishing the virtual parking space based on the position information of the target parking space predetermined in the map of the parking lot, and planning the automatic parking path based on the virtual parking space along with the position information of the vehicle in the map of the parking lot" on a basis of the technical solution provided in Example 3. The explanation of terms that are the same as or correspond to those in the above examples will not be repeated here.

That is, the optimizing may include: detecting, in response to the vehicle reaching the target parking region in the parking lot, whether the vehicle identifies the target parking space in the target parking region; when the vehicle identifies the target parking space in the target parking region, determining a coordinate position of the target parking space in a vehicle body coordinate system, and planning the automatic parking path; and when the vehicle identifies no target parking space in the target parking region, establishing the virtual parking space based on the position information of the target parking space predetermined in the map of the parking lot, and planning the automatic parking path based on the virtual parking space along with the position information of the vehicle in the map of the parking lot.

As illustrated in FIG. 4, on a basis of the above optimization, the automatic parking method according to this example may specifically include the following steps.

In step S401, the map of the parking lot is obtained in response to the vehicle entering the parking lot.

In step S402, during the process of driving in the parking lot, the environmental feature information around the vehicle is collected.

In step S403, the collected environmental feature information is matched with environmental feature information in the map of the parking lot to determine the position information of the vehicle in the map of the parking lot.

In step S404, it is detected whether a distance between the position information of the vehicle and the target parking region in the map of the parking lot is smaller than a second distance threshold. When the distance between the position information of the vehicle and the target parking region in the map of the parking lot is smaller than the second distance threshold, step S405 is executed; and when the distance between the position information of the vehicle and the target parking region in the map of the parking lot is not smaller than the second distance threshold, the process returns to execute the step S402.

In step S405, it is determined that the vehicle has reached the target parking region.

In step S406, it is detected whether the vehicle identifies the target parking space in the target parking region. When the vehicle identifies the target parking space in the target parking region, step S407 is executed; and when the vehicle identifies no target parking space in the target parking region, step S408 is executed.

It should be noted that identifying the target parking space in this step refers to detecting an idle parking space by the ultrasonic radar on the vehicle in a conventional manner.

In step S407, a coordinate position of the target parking space in a vehicle body coordinate system is determined, and the automatic parking path is planned.

It should be noted that in this example, a conventional automatic parking method is still provided for giving the driver more choices and better experience. That is, when the conventional automatic parking method is applicable, the conventional automatic parking method is preferred for implementing automatic parking since the conventional automatic parking method is more in line with the driver's vehicle usage habits. When the target parking space cannot be identified and the conventional automatic parking method fails, a parking mode based on the virtual parking space is instead adopted for automatic parking to ensure the success rate of automatic parking.

In step S408, the virtual parking space is established based on the position information of the target parking space predetermined in the map of the parking lot, and the automatic parking path is planned based on the virtual parking space along with the position information of the vehicle in the map of the parking lot.

In step S409, the vehicle is parked into the target parking space based on the automatic parking path.

In addition to the advantageous effects of Example 3, the example of the present disclosure also enriches automatic parking modes selectable by the driver, and enables automatic switching between modes according to practical situations, thereby making the vehicle intelligent and user-friendly.

### Example 5

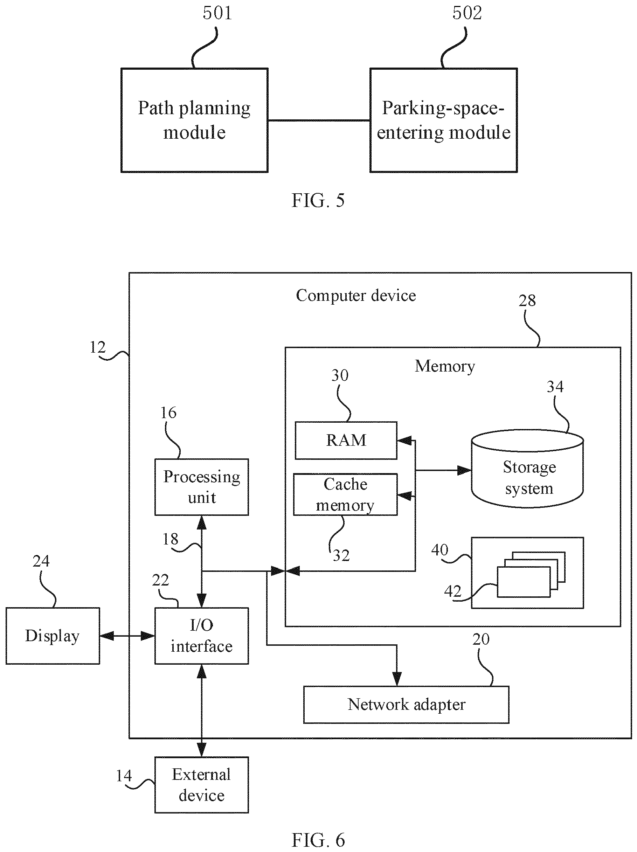

Referring to FIG. 5, Fig. 5 is a schematic block diagram showing functional modules of an automatic parking system according to Example 5 of the present disclosure. The system is suitable for performing the automatic parking method according to the examples of the present disclosure. The system specifically includes a path planning module 501 and a parking-space-entering module 502.

The path planning module 501 is configured to establish, in response to a vehicle reaching a target parking region in a parking lot, a virtual parking space based on position information of a target parking space predetermined in a map of the parking lot, and plan an automatic parking path based on the virtual parking space along with position information of the vehicle in the map of the parking lot.

The parking-space-entering module 502 is configured to park the vehicle into the target parking space based on the automatic parking path.

Preferably, the system further includes a map obtaining module and a driving determining module. The map obtaining module is configured to obtain, in response to the vehicle entering the parking lot, the map of the parking lot, prior to establishing, in response to the vehicle reaching the target parking region in the parking lot, the virtual parking space based on the position information of the target parking space predetermined in the map of the parking lot, and planning the automatic parking path based on the virtual parking space along with the position information of the vehicle in the map of the parking lot. The driving determining module is configured to determine, during a process of driving in the parking lot, whether the vehicle has reached the target parking region.

Preferably, the map obtaining module is specifically configured to: detect whether a GPS signal of the vehicle is weakened or lost; obtain, when the GPS signal of the vehicle is weakened or lost, a GPS position of the vehicle; detect whether a distance between the GPS position of the vehicle and the parking lot is smaller than a first distance threshold; and when the distance between the GPS position of the vehicle and the parking lot is smaller than the first distance threshold, determine that the vehicle has entered the parking lot, and obtain the map of the parking lot.

Preferably, the driving determining module is specifically configured to: collect, during the process of driving in the parking lot, environmental feature information around the vehicle; match the collected environmental feature information with environmental feature information in the map of the parking lot to determine the position information of the vehicle in the map of the parking lot; detect whether a distance between the position information of the vehicle and the target parking region in the map of the parking lot is smaller than a second distance threshold; and when the distance between the position information of the vehicle and the target parking region in the map of the parking lot is smaller than the second distance threshold, determine that the vehicle has reached the target parking region.

Preferably, the path planning module 501 is specifically configured to: detect, in response to the vehicle reaching the target parking region in the parking lot, whether the vehicle identifies the target parking space in the target parking region; when the vehicle identifies the target parking space in the target parking region, determine a coordinate position of the target parking space in a vehicle body coordinate system, and plan the automatic parking path; and when the vehicle identifies no target parking space in the target parking region, establish the virtual parking space based on the position information of the target parking space predetermined in the map of the parking lot, and plan the automatic parking path based on the virtual parking space along with the position information of the vehicle in the map of the parking lot.

With the automatic parking system according to the example of the present disclosure, by using the map corresponding to the parking lot to assist the vehicle in planning the automatic parking path after the vehicle enters the parking lot, efficient, flexible and safe automatic parking can be performed, which overcomes a defect in the related art that the vehicle cannot be parked in case the target parking space cannot be identified by the vehicle, improves use experience of the driver, and is suitable for large-scale promotion and application.

The above system can execute the method provided by any example of the present disclosure, and has corresponding functional modules and advantageous effects for performing the method.

### Example 6

FIG. 6 is a schematic block diagram showing a structure of a computer device according to Example 6 of the present disclosure. FIG. 6 is a block diagram showing an example computer device 12 suitable for practicing implementations of the present disclosure. The computer device 12 illustrated in FIG. 6 is only illustrated as an example, and should not bring any limitation to functions and an application scope of the examples of the present disclosure.

As illustrated in FIG. 6, the computer device 12 is in a form of a general-purpose computing device. The computer device 12 may include, but is not limited to, one or more processors or processing units 16, a system memory 28, and a bus 18 connecting different system components (including the system memory 28 and the processing unit 16).

The bus 18 represents one or more of several types of bus structures, including a memory bus or a memory controller, a peripheral bus, an accelerated graphics port, and a processor or local bus using any of a variety of bus architectures. For example, these architectures include, but are not limited to, an Industry Standard Architecture (ISA) bus, a Micro-Channel Architecture (MCA) bus, an enhanced ISA bus, a Video Electronics Standards Association (VESA) local bus, and a Peripheral Component Interconnect (PCI) bus.

Typically, the computer device 12 may include different kinds of computer system-readable media. These media may be any available media accessible by the computer device 12, including a volatile or non-volatile storage medium and a removable or non-removable storage medium.

The system memory 28 may include a computer system-readable medium in a form of volatile memory, such as a Random Access Memory (RAM) 30 and/or a cache memory 32. The computer device 12 may further include other removable/non-removable storage media and volatile/non-volatile storage media. By way of example only, the storage system 34 may be configured to read and write non-removable, non-volatile magnetic media (not illustrated in FIG. 6, and commonly referred to as "hard disk drives"). Although not illustrated in FIG. 6, a magnetic disk drive for reading and writing removable non-volatile magnetic disks (e.g., "floppy disks"), and an optical disc drive for reading and writing removable non-volatile optical discs (e.g. a Compact Disc-Read Only Memory (CD-ROM), a Digital Video Disc-Read Only Memory (DVD-ROM), or other optical media) can be provided. In these cases, each drive may be connected to the bus 18 via one or more data medium interfaces. The memory 28 may include at least one program product, which has a set of program modules (for example, at least one program module) configured to perform functions of examples of the present disclosure.

A program/utility 40 with a set of program modules 42 (at least one program module) may be stored in the memory 28 for example. The program modules 42 may include, but be not limited to, an operating system, one or more applications, other program modules and program data, and any one or combination of the foregoing may include an implementation of a network environment. The program modules 42 are generally configured to implement functions and/or methods described in the examples of the present disclosure.

The computer device 12 may also communicate with one or more external devices 14 (e.g., a keyboard, a pointing device, a display 24, etc.), one or more devices that enable a user to interact with the computer device 12, and/or any device (e.g., a network interface controller, a modem, etc.) that enables the computer device 12 to communicate with one or more other computing devices. This kind of communication can be performed via the Input/Output (I/O) interface 22. In addition, the computer device 12 may communicate with one or more networks (such as a Local Area Network (LAN), a Wide Area Network (WAN) and/or a public network such as the Internet) through a network adapter 20. As illustrated in the figure, the network adapter 20 communicates with other modules of the computer device 12 over the bus 18. It should be understood that although not illustrated in FIG. 6, other hardware and/or software modules may be used in combination with the computer device 12, which include, but are not limited to, microcodes, device drivers, redundant processing units, external disk drive arrays, Redundant Arrays of Independent Disks (RAID) systems, tape drives, as well as data backup storage systems and the like.

By running a program stored in the system memory 28, the processing unit 16 can be configured to perform various functional applications and data processing, for example, to perform the automatic parking method according to the examples of the present disclosure.

That is, the processing unit, when executing the program, is configured to perform operations including: establishing, in response to a vehicle reaching a target parking region in a parking lot, a virtual parking space based on position information of a target parking space predetermined in a map of the parking lot, and planning an automatic parking path based on the virtual parking space along with position information of the vehicle in the map of the parking lot; and parking the vehicle into the target parking space based on the automatic parking path.

### Example 7

Example 7 of the present disclosure provides a computer-readable storage medium having computer executable instructions stored thereon. The computer executable instructions, when executed by a processor, perform the automatic parking method according to the examples of the present disclosure.

That is, the processor, when executing the computer executable instructions, is configured to perform operations including: establishing, in response to a vehicle reaching a target parking region in a parking lot, a virtual parking space based on position information of a target parking space predetermined in a map of the parking lot, and planning an automatic parking path based on the virtual parking space along with position information of the vehicle in the map of the parking lot; and parking the vehicle into the target parking space based on the automatic parking path.

Any combination of one or more computer-readable media can be adopted. The computer-readable medium may be a computer-readable signal medium or a computer-readable storage medium. The computer-readable storage medium may be, but is not limited to, for example, an electrical, magnetic, optical, electromagnetic, infrared, or semiconductor system, apparatus, device or any combination thereof. Specific examples (a non-exhaustive list) of the computer-readable storage media include an electrical connection having one or more wires, a portable computer diskette, a hard disk, an RAM, a ROM, an Erasable Programmable ROM (EPROM) or a flash memory, an optical fiber, a Compact Disc-Read Only Memory (CD-ROM), an optical memory device, a magnetic memory device, or any suitable combination thereof. In the present disclosure, the computer-readable storage medium may be any tangible medium including or storing programs. The programs may be used by or in combination with an instruction execution system, apparatus or device.

The computer-readable signal medium may include a data signal propagating in a baseband or as part of a carrier which carries computer-readable program codes. The data signal propagating in such a manner may be in many forms, including but not limited to, an electromagnetic signal, an optical signal, or any suitable combination thereof. The computer-readable signal medium may also be any computer-readable medium other than the computer-readable storage medium, which may transmit, propagate, or transport programs used by or in combination with an instruction execution system, apparatus or device.

The program codes stored on the computer-readable medium may be transmitted using any appropriate medium, including but not limited to a wireless medium, a wireline, an optical fiber cable, Radio Frequency (RF), or any suitable combination thereof.

Computer program codes for carrying out operations of the present disclosure may be written in one or more programming languages, including an object-oriented programming language, such as Java, Smalltalk, C ++, as well as a conventional procedural programming language, such as "C" language or similar programming languages. The program codes may be executed entirely on a user's computer, partly on the user's computer, as a separate software package, partly on the user's computer and partly on a remote computer, or entirely on the remote computer or a remote server. In a case of the remote computer, the remote computer may be connected to the user's computer or an external computer through any kind of network, including an LAN or a WAN (e.g., over the Internet by using an Internet service provider).

It should be noted that, the above are only preferred examples and technical principles applied in the present disclosure. Those skilled in the art should understand that, the present disclosure is not limited to the specific examples described herein, and various obvious changes, readjustments and alternatives can be made by those skilled in the art without departing from the protection scope of the present disclosure. Therefore, although the present disclosure has been described in detail by the above examples, the present disclosure is not limited to the above examples, and more other equivalent examples may be included without departing from the concept of the present disclosure. The scope of the present disclosure is determined by the scope of the claims as attached.

## Claims

1. An automatic parking method, comprising:
establishing, in response to a vehicle reaching a target parking region in a parking lot, a virtual parking space based on position information of a target parking space predetermined in a map of the parking lot, and planning an automatic parking path based on the virtual parking space along with position information of the vehicle in the map of the parking lot, wherein the target parking region contains the target parking space; and
parking the vehicle into the target parking space based on the automatic parking path,
wherein the automatic parking method further comprises, prior to said establishing, in response to the vehicle reaching the target parking region in the parking lot, the virtual parking space based on the position information of the target parking space predetermined in the map of the parking lot, and planning the automatic parking path based on the virtual parking space along with the position information of the vehicle in the map of the parking lot:
obtaining, in response to the vehicle entering the parking lot, the map of the parking lot; and **characterized in**
determining, during a process of driving in the parking lot, whether the vehicle has reached the target parking region, and
wherein said determining, during the process of driving in the parking lot, whether the vehicle has reached the target parking region comprises:
collecting, during the process of driving in the parking lot, environmental feature information around the vehicle;
matching the collected environmental feature information with environmental feature information in the map of the parking lot to determine the position information of the vehicle in the map of the parking lot;
detecting whether a distance between the position information of the vehicle and the target parking region in the map of the parking lot is smaller than a second distance threshold; and
when the distance between the position information of the vehicle and the target parking region in the map of the parking lot is smaller than the second distance threshold, determining that the vehicle has reached the target parking region.

2. The automatic parking method according to claim 1, wherein said establishing, in response to the vehicle reaching the target parking region in the parking lot, the virtual parking space based on the position information of the target parking space predetermined in the map of the parking lot, and planning the automatic parking path based on the virtual parking space along with the position information of the vehicle in the map of the parking lot comprises:
detecting, in response to the vehicle reaching the target parking region in the parking lot, whether the vehicle identifies the target parking space in the target parking region;
when the vehicle identifies the target parking space in the target parking region, determining a coordinate position of the target parking space in a vehicle body coordinate system, and planning the automatic parking path; and
when the vehicle identifies no target parking space in the target parking region, establishing the virtual parking space based on the position information of the target parking space predetermined in the map of the parking lot, and planning the automatic parking path based on the virtual parking space along with the position information of the vehicle in the map of the parking lot.

3. An automatic parking system, comprising:
a path planning module configured to establish, in response to a vehicle reaching a target parking region in a parking lot, a virtual parking space based on position information of a target parking space predetermined in a map of the parking lot, and plan an automatic parking path based on the virtual parking space along with position information of the vehicle in the map of the parking lot, wherein the target parking region contains the target parking space; and
a parking-space-entering module configured to park the vehicle into the target parking space based on the automatic parking path,
wherein the automatic parking system further comprises:
a map obtaining module configured to obtain, in response to the vehicle entering the parking lot, the map of the parking lot, prior to said establishing, in response to the vehicle reaching the target parking region in the parking lot, the virtual parking space based on the position information of the target parking space predetermined in the map of the parking lot, and planning the automatic parking path based on the virtual parking space along with the position information of the vehicle in the map of the parking lot; and **characterized in that**, the automatic parking system further comprises
a driving determining module configured to determine, during a process of driving in the parking lot, whether the vehicle has reached the target parking region, and
wherein the driving determining module is configured to:
collect, during the process of driving in the parking lot, environmental feature information around the vehicle;
match the collected environmental feature information with environmental feature information in the map of the parking lot to determine the position information of the vehicle in the map of the parking lot;
detect whether a distance between the position information of the vehicle and the target parking region in the map of the parking lot is smaller than a second distance threshold; and
when the distance between the position information of the vehicle and the target parking region in the map of the parking lot is smaller than the second distance threshold, determine that the vehicle has reached the target parking region.

4. The automatic parking system according to claim 3, wherein the path planning module is configured to:
detect, in response to the vehicle reaching the target parking region in the parking lot, whether the vehicle identifies the target parking space in the target parking region;
when the vehicle identifies the target parking space in the target parking region, determine a coordinate position of the target parking space in a vehicle body coordinate system, and plan the automatic parking path; and
when the vehicle identifies no target parking space in the target parking region, establish the virtual parking space based on the position information of the target parking space predetermined in the map of the parking lot, and plan the automatic parking path based on the virtual parking space along with the position information of the vehicle in the map of the parking lot.

5. A computer device, comprising:
a memory having a computer program stored thereon; and
a processor,
wherein the processor is configured to, when executing the computer program, implement the automatic parking method according to claim 1 or 2.

6. A storage medium, having computer-executable instructions stored thereon, wherein the computer-executable instructions are executed by a computer processor to implement the automatic parking method according to claim 1 or 2.

## Patentansprüche

1. Verfahren zum automatischen Parken, das Folgendes beinhaltet:
Ermitteln, als Reaktion auf das Erreichen eines Ziel-Parkbereichs auf einem Parkplatz durch ein Fahrzeug, eines virtuellen Parkstands auf Basis von Positionsinformationen eines in einer Karte des Parkplatzes vorbestimmten Ziel-Parkstands und Planen eines Wegs des automatischen Einparkens auf Basis des virtuellen Parkstands zusammen mit den Positionsinformationen des Fahrzeugs in der Karte des Parkplatzes. wobei der Ziel-Parkbereich den Ziel-Parkstand enthält; und
Einparken des Fahrzeugs auf dem Ziel-Stellplatz auf Basis des Wegs des automatischen Einparkens,
wobei das Verfahren zum automatischen Parken vor dem genannten Ermitteln, als Reaktion auf das Erreichen des Ziel-Parkbereichs auf dem Parkplatz durch das Fahrzeug, des virtuellen Parkstands auf Basis der Positionsinformationen des in der Karte des Parkplatzes vorbestimmten Ziel-Parkstands und dem Planen des Wegs des automatischen Einparkens auf Basis des virtuellen Parkstands zusammen mit den Positionsinformationen des Fahrzeugs in der Karte des Parkplatzes ferner Folgendes beinhaltet:
Erhalten, als Reaktion auf das Einfahren des Fahrzeugs in den Parkplatz, der Karte des Parkplatzes; und **gekennzeichnet durch**
Bestimmen, während eines Vorgangs des Fahrens auf dem Parkplatz, ob das Fahrzeug den Ziel-Parkbereich erreicht hat, und
wobei das genannte Bestimmen, während des Vorgangs des Fahrens auf dem Parkplatz, ob das Fahrzeug den Ziel-Parkbereich erreicht hat, Folgendes beinhaltet:
Erfassen, während des Vorgangs des Fahrens auf dem Parkplatz, von Umgebungsmerkmalsinformationen um das Fahrzeug;
Abstimmen der erfassten Umgebungsmerkmalsinformationen mit Umgebungsmerkmalsinformationen in der Karte des Parkplatzes zum Bestimmen der Positionsinformationen des Fahrzeugs in der Karte des Parkplatzes;
Erkennen, ob ein Abstand zwischen den Positionsinformationen des Fahrzeugs und dem Ziel-Parkbereich in der Karte des Parkplatzes kleiner als ein zweiter Abstandsschwellenwert ist; und,
wenn der Abstand zwischen den Positionsinformationen des Fahrzeugs und dem Ziel-Parkbereich in der Karte des Parkplatzes kleiner als der zweite Abstandsschwellenwert ist, Bestimmen, dass das Fahrzeug den Ziel-Parkbereich erreicht hat.

2. Verfahren zum automatischen Parken nach Anspruch 1, wobei das genannte Ermitteln, als Reaktion auf das Erreichen des Ziel-Parkbereichs auf dem Parkplatz durch das Fahrzeug, des virtuellen Parkstands auf Basis der Positionsinformationen des in der Karte des Parkplatzes vorbestimmten Ziel-Parkstands und Planen des Wegs des automatischen Einparkens auf Basis des virtuellen Parkstands zusammen mit den Positionsinformationen des Fahrzeugs in der Karte des Parkplatzes Folgendes beinhaltet:
Erkennen, als Reaktion auf das Erreichen des Ziel-Parkbereichs auf dem Parkplatz durch das Fahrzeug, ob das Fahrzeug den Ziel-Parkstand im Ziel-Parkbereich identifiziert,
wenn das Fahrzeug den Ziel-Parkstand im Ziel-Parkbereich identifiziert, Bestimmen einer Koordinatenposition des Ziel-Parkstands in einem Fahrzeugkörper-Koordinatensystem und Planen des Wegs des automatischen Einparkens; und,
wenn das Fahrzeug keinen Ziel-Parkstand im Ziel-Parkbereich identifiziert, Ermitteln des virtuellen Parkstands auf Basis der Positionsinformationen des in der Karte des Parkplatzes vorbestimmten Ziel-Parkstands und Planen des Wegs des automatischen Einparkens auf Basis des virtuellen Parkstands zusammen mit den Positionsinformationen des Fahrzeugs in der Karte des Parkplatzes.

3. Automatisches Parksystem, das Folgendes beinhaltet:
ein Wegplanungsmodul, das zum Ermitteln, als Reaktion auf das Erreichen eines Ziel-Parkbereichs auf einem Parkplatz durch ein Fahrzeug, eines virtuellen Parkstands auf Basis von Positionsinformationen eines in einer Karte des Parkplatzes vorbestimmten Ziel-Parkstands und Planen eines Wegs des automatischen Einparkens auf Basis des virtuellen Parkstands zusammen mit Positionsinformationen des Fahrzeugs in der Karte des Parkplatzes konfiguriert ist; wobei der Ziel-Parkbereich den Ziel-Parkstand enthält; und
ein Parkstandeinfahrmodul, das zum Einparken des Fahrzeugs auf dem Ziel-Parkstand auf Basis des Wegs des automatischen Einparkens konfiguriert ist,
wobei das automatische Parksystem ferner Folgendes beinhaltet:
ein Kartenerhaltemodul, das zum Erhalten, als Reaktion auf das Einfahren des Fahrzeugs in den Parkplatz, der Karte des Parkplatzes vor dem genannten Ermitteln, als Reaktion auf das Erreichen des Ziel-Parkbereichs auf dem Parkplatz durch das Fahrzeug, des virtuellen Parkstands auf Basis der Positionsinformationen des in der Karte des Parkplatzes vorbestimmten Ziel-Parkstands und Planen des Wegs des automatischen Einparkens auf Basis des virtuellen Parkstands zusammen mit den Positionsinformationen des Fahrzeugs in der Karte des Parkplatzes konfiguriert ist; und **dadurch gekennzeichnet, dass** das automatische Parksystem ferner Folgendes beinhaltet:
ein Fahrbestimmungsmodul, das zum Bestimmen, während eines Vorgangs des Fahrens auf dem Parkplatz, ob das Fahrzeug den Ziel-Parkbereich erreicht hat, konfiguriert ist, und
wobei das Fahrbestimmungsmodul konfiguriert ist zum:
Erfassen, während des Vorgangs des Fahrens auf dem Parkplatz, von Umgebungsmerkmalsinformationen um das Fahrzeug;
Abstimmen der erfassten Umgebungsmerkmalsinformationen mit Umgebungsmerkmalsinformationen in der Karte des Parkplatzes zum Bestimmen der Positionsinformationen des Fahrzeugs in der Karte des Parkplatzes;
Erkennen, ob ein Abstand zwischen den Positionsinformationen des Fahrzeugs und dem Ziel-Parkbereich in der Karte des Parkplatzes kleiner als ein zweiter Abstandsschwellenwert ist; und,
wenn der Abstand zwischen den Positionsinformationen des Fahrzeugs und dem Ziel-Parkbereich in der Karte des Parkplatzes kleiner als der zweite Abstandsschwellenwert ist, Bestimmen, dass das Fahrzeug den Ziel-Parkbereich erreicht hat.

4. Automatisches Parksystem nach Anspruch 3, wobei das Wegplanungsmodul konfiguriert ist zum:
Erkennen, als Reaktion auf das Erreichen des Ziel-Parkbereichs auf dem Parkplatz durch das Fahrzeug, ob das Fahrzeug den Ziel-Parkstand im Ziel-Parkbereich identifiziert,
wenn das Fahrzeug den Ziel-Parkstand im Ziel-Parkbereich identifiziert, Bestimmen einer Koordinatenposition des Ziel-Parkstands in einem Fahrzeugkörper-Koordinatensystem und Planen des Wegs des automatischen Einparkens; und,
wenn das Fahrzeug keinen Ziel-Parkstand im Ziel-Parkbereich identifiziert, Ermitteln des virtuellen Parkstands auf Basis der Positionsinformationen des in der Karte des Parkplatzes vorbestimmten Ziel-Parkstands und Planen des Wegs des automatischen Einparkens auf Basis des virtuellen Parkstands zusammen mit den Positionsinformationen des Fahrzeugs in der Karte des Parkplatzes.

5. Computervorrichtung, die Folgendes beinhaltet:
einen Speicher mit einem darin gespeicherten Computerprogramm; und
einen Prozessor,
wobei der Prozessor zum Implementieren des Verfahrens zum automatischen Parken nach Anspruch 1 oder 2 beim Ausführen des Computerprogramms konfiguriert ist.

6. Speichermedium mit in ihm gespeicherten computerausführbaren Anweisungen, wobei die computerausführbaren Anweisungen von einem Computerprozessor ausgeführt werden, um das Verfahren zum automatischen Parken nach Anspruch 1 oder 2 zu implementieren.

## Revendications

1. Procédé de stationnement automatique, comprenant :
un établissement, en réponse au fait qu'un véhicule atteint une région de stationnement cible dans un parc de stationnement, d'un espace de stationnement virtuel sur la base d'informations de position d'un espace de stationnement cible prédéterminé dans une cartographie du parc de stationnement, et une planification d'une trajectoire de stationnement automatique sur la base de l'espace de stationnement virtuel ainsi que des informations de position du véhicule dans la cartographie du parc de stationnement, dans lequel la région de stationnement cible contient l'espace de stationnement cible ; et
un stationnement du véhicule dans l'espace de stationnement cible sur la base de la trajectoire de stationnement automatique,
dans lequel le procédé de stationnement automatique comprend en outre, avant ledit établissement, en réponse au fait que le véhicule atteint la région de stationnement cible dans le parc de stationnement, de l'espace de stationnement virtuel sur la base des informations de position de l'espace de stationnement cible prédéterminé dans la cartographie du parc de stationnement, et ladite planification de la trajectoire de stationnement automatique sur la base de l'espace de stationnement virtuel ainsi que des informations de position du véhicule dans la cartographie du parc de stationnement :
une obtention, en réponse à l'entrée du véhicule dans le parc de stationnement, de la cartographie du parc de stationnement ;
et **caractérisé par** une détermination, pendant un processus de conduite dans le parc de stationnement, du fait que le véhicule ait atteint ou non la région de stationnement cible, et
dans lequel ladite détermination, pendant le processus de conduite dans le parc de stationnement, du fait que le véhicule ait atteint ou non la région de stationnement cible comprend :
une collecte, pendant le processus de conduite dans le parc de stationnement, d'informations de caractéristiques environnementales autour du véhicule ;
une mise en correspondance des informations de caractéristiques environnementales collectées avec des informations de caractéristiques environnementales dans la cartographie du parc de stationnement pour déterminer les informations de position du véhicule dans la cartographie du parc de stationnement ;
une détection du fait qu'une distance entre les informations de position du véhicule et la région de stationnement cible dans la cartographie du parc de stationnement est inférieure ou non à un second seuil de distance ; et
lorsque la distance entre les informations de position du véhicule et la région de stationnement cible dans la cartographie du parc de stationnement est inférieure au second seuil de distance, une détermination du fait que le véhicule a atteint la région de stationnement cible.

2. Procédé de stationnement automatique selon la revendication 1, dans lequel ledit établissement, en réponse au fait que le véhicule atteint la région de stationnement cible dans le parc de stationnement, de l'espace de stationnement virtuel sur la base des informations de position de l'espace de stationnement cible prédéterminé dans la cartographie du parc de stationnement, et ladite planification de la trajectoire de stationnement automatique sur la base de l'espace de stationnement virtuel ainsi que des informations de position du véhicule dans la cartographie du parc de stationnement comprend :
une détection, en réponse au fait que le véhicule atteint la région de stationnement cible dans le parc de stationnement, du fait que le véhicule identifie l'espace de stationnement cible dans la région de stationnement cible ;
lorsque le véhicule identifie l'espace de stationnement cible dans la région de stationnement cible, une détermination d'une position de coordonnées de l'espace de stationnement cible dans un système de coordonnées de corps de véhicule, et une planification de la trajectoire de stationnement automatique ; et
lorsque le véhicule n'identifie aucun espace de stationnement cible dans la région de stationnement cible, un établissement de l'espace de stationnement virtuel sur la base des informations de position de l'espace de stationnement cible prédéterminé dans la cartographie du parc de stationnement, et une planification de la trajectoire de stationnement automatique sur la base de l'espace de stationnement virtuel ainsi que des informations de position du véhicule dans la cartographie du parc de stationnement.

3. Système de stationnement automatique, comprenant :
un module de planification de trajectoire configuré pour établir, en réponse au fait qu'un véhicule atteint une région de stationnement cible dans un parc de stationnement, un espace de stationnement virtuel sur la base d'informations de position d'un espace de stationnement cible prédéterminé dans une cartographie du parc de stationnement, et planifier une trajectoire de stationnement automatique sur la base de l'espace de stationnement virtuel ainsi que des informations de position du véhicule dans la cartographie du parc de stationnement, dans lequel la région de stationnement cible contient l'espace de stationnement cible ; et
un module d'entrée dans un espace de stationnement configuré pour stationner le véhicule dans l'espace de stationnement cible sur la base de la trajectoire de stationnement automatique,
dans lequel le système de stationnement automatique comprend en outre :
un module d'obtention de cartographie configuré pour obtenir, en réponse à l'entrée du véhicule dans le parc de stationnement, une cartographie du parc de stationnement, avant ledit établissement, en réponse au fait que le véhicule atteint la région de stationnement cible dans le parc de stationnement, de l'espace de stationnement virtuel sur la base des informations de position de l'espace de stationnement cible prédéterminé dans la cartographie du parc de stationnement, et ladite planification de la trajectoire de stationnement automatique sur la base de l'espace de stationnement virtuel ainsi que des informations de position du véhicule dans la cartographie du parc de stationnement ; et **caractérisé en ce que** le système de stationnement automatique comprend en outre
un module de détermination de conduite configuré pour déterminer, pendant un processus de conduite dans le parc de stationnement, le fait que le véhicule ait atteint ou non la région de stationnement cible, et
dans lequel le module de détermination de conduite est configuré pour :
collecter, pendant le processus de conduite dans le parc de stationnement, des informations de caractéristiques environnementales autour du véhicule ;
mettre en correspondance les informations de caractéristiques environnementales collectées avec des informations de caractéristiques environnementales dans la cartographie du parc de stationnement pour déterminer les informations de position du véhicule dans la cartographie du parc de stationnement ;
détecter le fait qu'une distance entre les informations de position du véhicule et la région de stationnement cible dans la cartographie du parc de stationnement est inférieure ou non à un second seuil de distance ; et
lorsque la distance entre les informations de position du véhicule et la région de stationnement cible dans la cartographie du parc de stationnement est inférieure au second seuil de distance, déterminer le fait que le véhicule a atteint la région de stationnement cible.

4. Système de stationnement automatique selon la revendication 3, dans lequel le module de planification de trajectoire est configuré pour :
détecter, en réponse au fait que le véhicule atteint la région de stationnement cible dans le parc de stationnement, le fait que le véhicule identifie l'espace de stationnement cible dans la région de stationnement cible ;
lorsque le véhicule identifie l'espace de stationnement cible dans la région de stationnement cible, déterminer une position de coordonnées de l'espace de stationnement cible dans un système de coordonnées de corps de véhicule, et planifier la trajectoire de stationnement automatique ; et
lorsque le véhicule n'identifie aucun espace de stationnement cible dans la région de stationnement cible, établir l'espace de stationnement virtuel sur la base des informations de position de l'espace de stationnement cible prédéterminé dans la cartographie du parc de stationnement, et planifier la trajectoire de stationnement automatique sur la base de l'espace de stationnement virtuel ainsi que des informations de position du véhicule dans la cartographie du parc de stationnement.

5. Dispositif informatique, comprenant :
une mémoire présentant un programme informatique stocké dessus ; et
un processeur,
dans lequel le processeur est configuré pour, lors d'une exécution du programme informatique, mettre en oeuvre le procédé de stationnement automatique selon la revendication 1 ou 2.

6. Support de stockage, présentant des instructions exécutables par ordinateur stockées dessus, dans lequel les instructions exécutables par ordinateur sont exécutées par un processeur informatique pour mettre en oeuvre le procédé de stationnement automatique selon la revendication 1 ou 2.
